(19) **Europäisches Patentamt / European Patent Office / Office européen des brevets**

(11) **EP 1 530 310 B1**

(12) **EUROPEAN PATENT SPECIFICATION**

(45) Date of publication and mention
of the grant of the patent:
**30.05.2007 Bulletin 2007/22**

(21) Application number: **03736296.9**

(22) Date of filing: **27.06.2003**

(51) Int Cl.:
*H04H 5/00* (2006.01)    *H04B 1/16* (2006.01)

(86) International application number:
**PCT/JP2003/008226**

(87) International publication number:
**WO 2004/008669 (22.01.2004 Gazette 2004/04)**

(54) **SEPARATION ADJUSTING CIRCUIT**

SCHALTUNG ZUR TRENNUNGSJUSTIERUNG

CIRCUIT D'ADAPTATION DE SEPARATION

(84) Designated Contracting States:
**DE FR GB NL**

(30) Priority: **12.07.2002 JP 2002203585**

(43) Date of publication of application:
**11.05.2005 Bulletin 2005/19**

(73) Proprietors:
- **KABUSHIKI KAISHA TOYOTA JIDOSHOKKI
  Kariya-shi,
  Aichi-ken 448-8671 (JP)**
- **Niigata Seimitsu Co., Ltd.
  Jouetsu-shi, Niigata 943-0834 (JP)**

(72) Inventors:
- **KOIKE, Tsuyoshi
  Kariya-shi,
  Aichi 448-8671 (JP)**

- **MIYAGI, Hiroshi
  c/o NIIGATA SEIMITSU CO., LTD.
  Joetsu-shi,
  Niigata 943-0834 (JP)**

(74) Representative: **TBK-Patent
Bavariaring 4-6
80336 München (DE)**

(56) References cited:
**JP-A- 9 036 821        JP-A- 10 303 649
US-A- 4 049 918        US-A- 4 944 010
US-A- 4 959 859        US-A- 4 972 482
US-B1- 6 175 278**

- **PATENT ABSTRACTS OF JAPAN vol. 006, no. 037 (E-097), 6 March 1982 (1982-03-06) & JP 56 157149 A (ROHM CO LTD), 4 December 1981 (1981-12-04)**
- **PATENT ABSTRACTS OF JAPAN vol. 1997, no. 06, 30 June 1997 (1997-06-30) & JP 09 036821 A (SANYO ELECTRIC CO LTD), 7 February 1997 (1997-02-07)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

## Technical Field

The present invention relates to a separation adjustment circuit for increasing the separation degree between a right signal and a left signal in a stereo receiver.

## Background Art

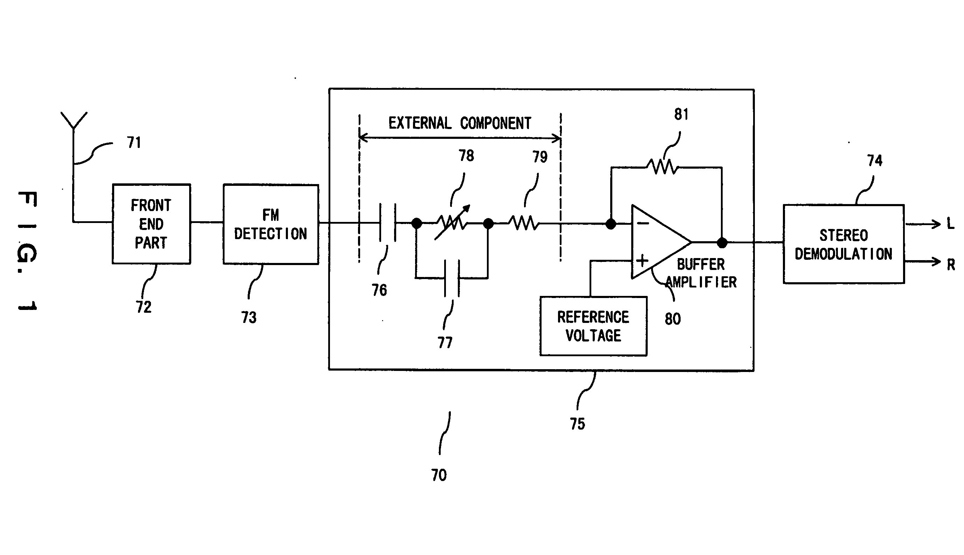

Fig. 1 shows a conventional stereo receiver.

As shown in Fig. 1, a stereo receiver 70 comprises an antenna 71, a front end part 72 for implementing a synchronization processing and a frequency conversion processing, etc., an F.M. detection part 73 outputting the composite signal including an L (left signal) +R (right signal) component signal, an L-R component signal and a pilot signal (signal for determining a stereo signal), a stereo demodulation circuit 74 demodulating the composite signal into a stereo right signal and a stereo left signal and a separation adjustment circuit 75 that is provided at the former stage of the stereo demodulation circuit 74 and adjusts the intensity ratio between an L+R component signal and an L-R component signal in order to increase the separation degree (separation) between stereo signals.

The separation adjustment circuit 75 comprises a capacitor 76 for cutting a direct current component, a capacitor 77, a variable resistance 78, a resistance 79, abufferamplifier80andaresistance81. This circuit adjusts the intensity of the L+R component signal by changing a resistance value of the variable resistance 78. Meanwhile, the capacitors 76 and 77, the variable resistance 78 and the resistance 79 are external components that are not configured on an IC chip.

The intensity of the L+R component signal that is outputted from the F.M. detection part 73 receives the influence of the variable resistance 78 and the resistances 79 and 81. The intensity of the L-R component signal, however, hardly receives the influence of the variable resistance 78 and it receives only the influences of the resistances 79 and 81.

That is, the following equations are satisfied.

$$\text{Intensity of L+R component} \fallingdotseq \text{resistance value of resistance 81/(resistance value of variable resistance 78 + resistance value of resistance 79)}$$

$$\text{Intensity of L-R component} \fallingdotseq \text{resistance value of resistance 81 /resistance value of resistance 79}$$

A frequency band of the L-R component signal is obtained by centering the frequency of 38kHz. In the case where the L-R component signal passes through the variable resistance 78, the impedance of the capacitor 77 is small and this signal passes through the capacitor 77 without receiving much influence of the variable resistance 78. On the other hand, in the case of the L+R component, the impedance of the capacitor 77 is large and the intensity (signal level) changes according to the resistance value of the variable resistance 78.

By changing the resistance value of the variable resistance 78 in this way, the intensity of the L+R component signal canbe changed. Therefore, the intensity ratio between the L+R component signal and the L-R component signal can be adequately adjusted so that it becomes possible to increase the separation degree between stereo signals.

In the conventional stereo receiver 70, however, there is a problem such that many components such as the capacitor 77, the variable resistance 78, etc. are mounted on an IC chip and the cost for mounting the external components increases.

Furthermore, there is another problem such that the mounting area of a printed board increases as the number of external components increases when the stereo receiver 70 is mounted on a printed board.

In addition, it is conceivable that the variable resistance 78 includes, for example, a trimmer resistance, etc. In the production line or the adjustment line of the stereo receiver 70, the resistance value is adjusted by adjusting the trimmer resistance using a driver. In this way, the adjustment of the resistance value of the variable resistance 78 is carried out by an adjustment operator so that the adjustment cannot work well. Therefore, it sometimes takes a long time to implement this adjustment.

Moreover, document JP 9 036821 A discloses a stereo demodulation circuit and a method for adjusting its degree of separation, wherein an automatic adjustment of the stereo separation is performed according to the levels of the demodulated stereo signals (L- and R-signals). Stereo sub-signals from a stereo composite signal are derived by a sub-signal decoder. The level adjusting circuit varies the input level of the sub-signal to the level according to the control signal from a control means. A stereo sum-signal as well as a stereo difference-signal are retrieved, and, upon further evaluation, a stereo right signal and a stereo left signal are generated.

Thereupon, the object of the present invention is to offer a separation adjustment circuit where a few external components are mounted and the intensity ratio between composite signals can be easily adjusted, in consideration of the above-mentioned problems.

According to the present invention this object is accomplished by a separation adjustment circuit as set out in the appended claims.

Specifically, a separation adjustment circuit for adjusting an intensity ratio between a sum signal and a difference signal in a stereo composite signal and for increasing a separation degree between a stereo right signal and a stereo left signal, comprises a sum signal retrieving unit retrieving a sum signal from the stereo composite signal; a difference signal retrieving unit retrieving a difference signal from the stereo composite signal; a mixing unit mixing the sum signal and the difference signal, thereby obtaining a stereo right signal and a stereo left signal; a first adjustment unit adjusting a current amount that flows in the sum signal retrieving unit or the difference signal retrieving unit and adjusting an intensity of the sum signal or an intensity of the difference signal; and a generation unit generating a control signal for controlling an adjustment operation of the first adjustment unit.

The sum signal is a signal that shows an L+R component signal obtained by adding the stereo right signal and the stereo left signal. The difference signal is a signal showing an L-R component signal that is the difference between the stereo right signal and the stereo left signal.

The sum signal retrieving unit is, for example, a current mirror circuit for retrieving a sum signal from the stereo composite signal that is inputted into a differential amplifier. Similarly, the difference signal retrieving unit is, for example, a current mirror circuit for retrieving a difference signal from the stereo composite signal.

The mixing unit is, for example, a mixer circuit for mixing the sum signal and the difference signal, thereby obtaining a stereo right signal and a stereo left signal. A stereo demodulation function is implemented by the sum signal retrieving unit, the difference signal retrieving unit and the mixing unit.

The first adjustment unit is, for example, a transistor on the output side for configuring the current mirror circuit. An intensity of the sum signal or the difference signal is adjusted by adjusting the current amount of a transistor on the side of this output so that the separation degree between a stereo right signal and a stereo left signal can be increased. In this way, the number of external components for adjusting an intensity of the sum signal or the difference signal, which are required for the conventional stereo receiver can be decreased. Therefore, it becomes possible to decrease the mounting area of a printed board.

Since the operation of the first adjustment unit is controlled based on the control signal generated by the generation unit, the intensity of the sum signal or the difference signal can be easily adjusted and the separation degree between a stereo right signal and a stereo left signal can be increased, without a manual operation.

In the separation adjustment circuit, the first adjustment unit comprises a plurality of transistors and a selection unit selecting the transistors based on the control signal. This first adjustment unit may adjust an intensity of the sum signal or the difference signal based on the total current amount of the transistors that are selected by the selection unit.

The selection unit is, for example, a switch and this switch is connected to each transistor. By adjusting a current amount that flows in the current mirror circuit by controlling an ON operation or OFF operation of the switch on the basis of the control signal, the switch can adjust the intensity ratio between a sum signal and a difference signal. Therefore, it becomes possible to increase the separation degree between a stereo right signal and a stereo left signal.

The separation adjustment circuit comprises a resistance that is connected to an output stage of the separation adjustment circuit and a second adjustment unit being connected to the resistance in parallel and adjusting a current amount flowing in the resistance. The second adjustment unit may adjust a current amount based on a current amount adjusted by the first adjustment unit.

Thus, the DC bias at an output of the separation adjustment circuit can be also adjusted in the first adjustment unit according to the intensity adjustment of the sum signal or the difference signal. Therefore, it becomes possible to set this DC bias to a predetermined DC bias that does not distort an output signal.

Additionally, the separation adjustment circuit is configured in such a way that the control signal is generated based on the separation degree between a stereo right signal and a stereo left signal that are outputted from the separation adjustment circuit.

Thus, it becomes possible to increase the reliability of the control signal.

**Brief Description of the Drawings**

The present invention is further clarified if both the detailed explanation that is described later and the attachment drawings are referred to.

Fig. 1 shows a conventional stereo receiver;
Fig. 2 shows a stereo receiver that is a preferred embodiment of the present invention;
Fig. 3 shows the circuit configuration of a separation adjustment circuit;
Fig. 4 shows the concrete examples of a current mirror circuit of a broken-line part C of Fig. 3;
Fig. 5 shows the configuration of the separation adjustment circuits of another preferred embodiment; and
Fig. 6 shows the configuration of the separation adjustment circuits of still another preferred embodiment.

## Best Mode for Carrying Out the Invention

The following is the detailed explanation of the present invention in reference to the drawings.

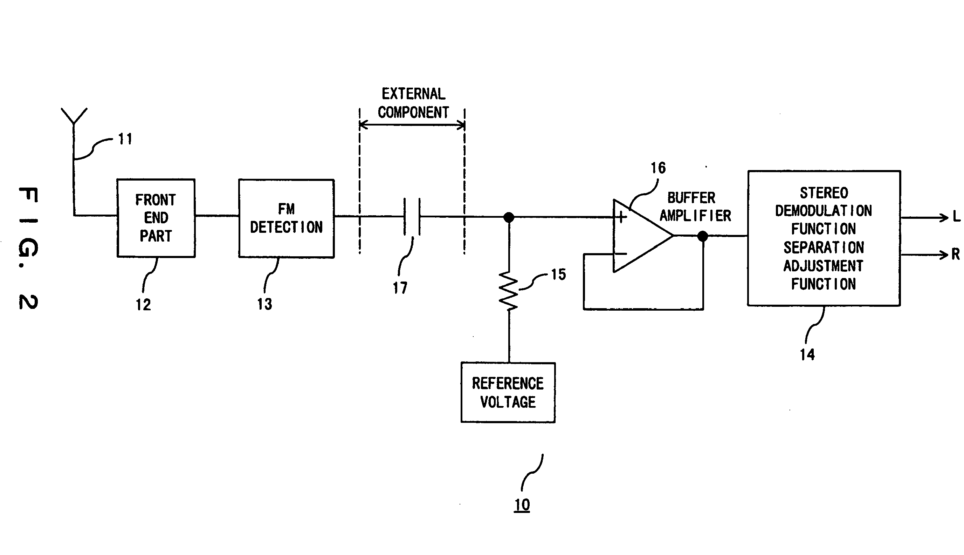

Fig. 2 shows the stereo receiver that is a preferred embodiment of the present invention.

As shown in Fig. 2, a stereo receiver 10 comprises an antenna 11, a front end part 12 for implementing a synchronization processing and a frequency conversion processing, etc., an F.M. detection part 13 outputting the composite signal including anL (left signal) +R (right signal) component signal, an L-R component signal and a pilot signal (signal for determining a stereo signal) and a separation adjustment circuit 14 having both a stereo demodulation function of demodulating the composite signal into a stereo right signal and a stereo left signal and a separation adjustment function of adjusting the intensity ratio between the L+R component signal and the L-R component signal in order to increase the separation degree (separation) between the stereo signals.

At the former stage of the separation adjustment circuit 14, a resistance 15 for supplying a reference voltage in order to adjust the DC bias of a reception signal, a buffer amplifier 16 and a capacitor 17 for cutting a direct current component as an external component, are provided.

Next, the separation adjustment circuit 14 is explained in detail.

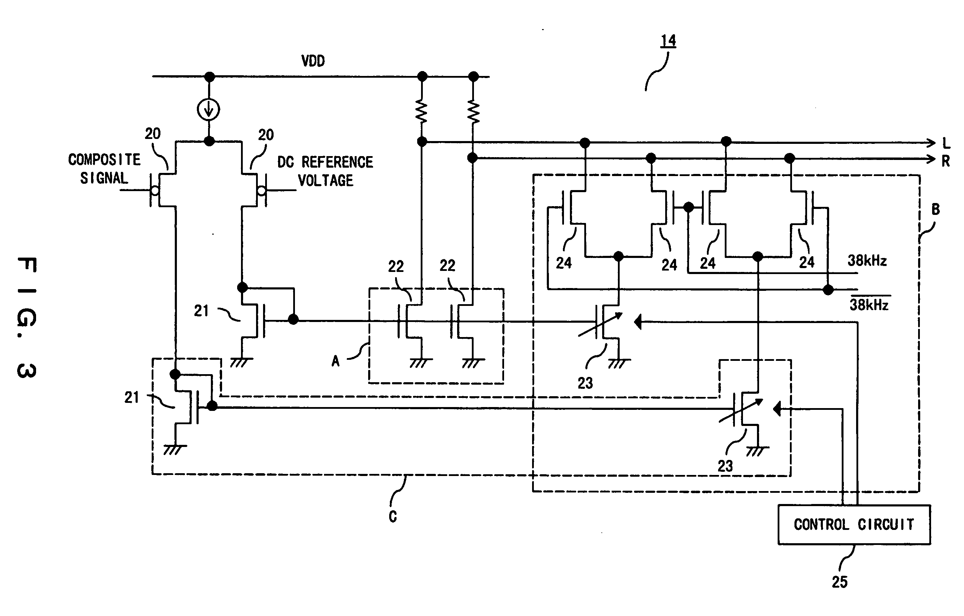

Fig. 3 shows the circuit configuration of the separation adjustment circuit 14.

At first, a composite signal and a DC reference voltage are inputted into a differential amplifier that includes a P channel MOS transistor 20. Then, the composite signal that is inputted into the differential amplifier is distributed to a broken line frame A and a broken line frame B by the current mirror circuit (sum signal retrieving unit) that includes N channel MOS transistors 21 and 22 and another current mirror circuit (difference signal retrieving unit) that includes transistors 21 and 23. A signal that is distributed to the broken line part A expresses an L+R component signal while a signal that is distributed to the broken line part B shows an L-R component signal. The L-R component signal is inputted into the mixer circuit (mixing unit) including a transistor 24 and then a 38kHz component signal is removed. And, in the mixer circuit, an L-R component signal obtained by removing the 38kHz component signal and an L+R component signal are mixed (sum or difference computation) so that a stereo right signal (R signal) and a stereo left signal (L signal) are obtained.

Then, in the separation adjustment circuit 14 of the preferred embodiment, the current amount of a current that flows in a current mirror circuit including the transistors 21 and 23, that is, the transistor 23 (first adjustment unit) of the broken line part B is adjusted by a control signal generated by the control circuit 25 (generation unit). By changing the current value that flows in the transistor 23 in this way, the intensity of the L-R component signal is adjusted so that the intensity ratio between the L+R component signal and the L-R component signal can be adjusted. As a result, it becomes possible to increase the separation degree between the L signal and the R signal.

The control signal that is generated by the control circuit 25 is the digital signal of an optional bit number and this signal controls the ON operation or OFF operation of a current amount adjustment switch that is described later.

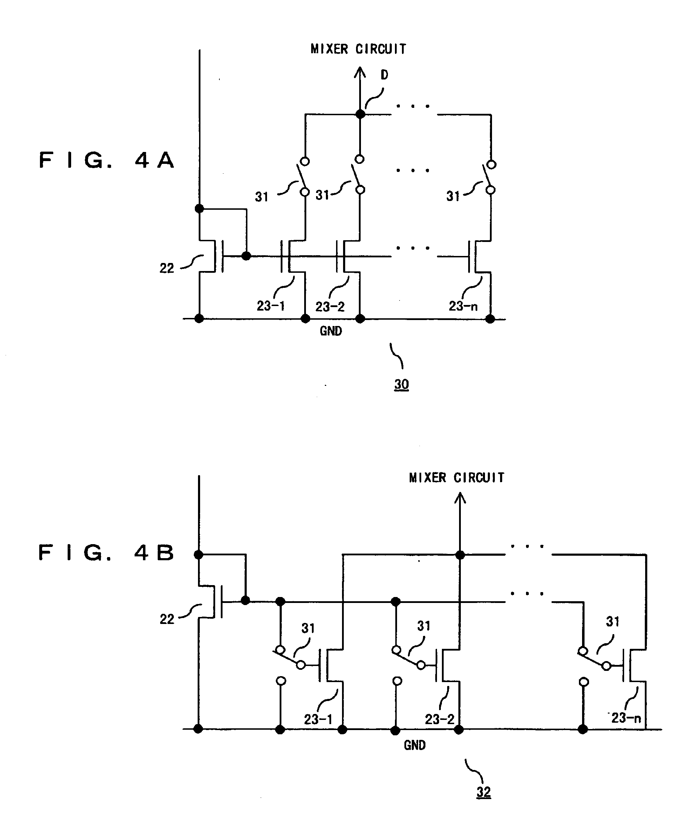

Fig. 4 shows the concrete example of a current mirror circuit of the broken line part C of Fig. 3. Meanwhile, it is assumed that a current mirror circuit including the transistors 21 and 23 outside the broken line part C has also the same configuration. Furthermore, the same control signal is supplied to two transistors 23 0 from the control circuit 25 and they function in the same way.

A current mirror circuit 30 as show in Fig. 4A includes a plurality of transistors 23 (23-1, 23-2, ... , 23-n) and a switch 31 (selection unit) that is connected to a drain of each transistor 23. The ON operation or the OFF operation of each switch 31 is controlled based on a control signal that is outputted from the control circuit 25. Meanwhile, the switch 31 includes a semiconductor switching element.

According to the selected switch 31, the current value of the current that flows in the current mirror circuit 30 changes and the intensity of the L-R component signal is adjusted. In other words, as the number of the switches 31 that become ON increases, the current amount that flows in a contact point D increases. Accordingly, the L-R component signal with a strong intensity is inputted into the mixer circuit. When the number of the switches 31 is small, on the contrary, the current amount that flows in the contact point D decreases and the L-R component signal with a weak intensity is inputted into the mixer circuit. By adjusting the intensity of the L-R component signal based on the number of the switches 31 that are ON in this way, the intensity ratio between the L+R component signal and the L-R component signal can be adjusted. Therefore, it becomes possible to increase the separation degree between an L signal and an R signal.

A current mirror circuit 32 of another example as shown in Fig. 4B includes a plurality of transistors 23 (23-1, 23-2, ... , 23-n) and the switch 31 that is connected to a gate of each transistor 23. The ON operation or the OFF operation of each switch 31 is controlled based on a control signal that is generated by the control circuit 25. Since the current value of a current that flows in the current mirror circuit 32 changes according to the number of the selected switches 31 in the same way as in Fig. 4A. Therefore, the intensity of the L-R component signal is adjusted in accordance with the change.

The control signal that is generated by the control circuit 25 is generated based on the separation degree between the stereo right signal and the stereo left signal that are outputted. That is, for example, in the case where a separation degree between the stereo right signal and the stereo left signal is low and an intensity of the L-R component signal is higher than the intensity of the L+R component signal, the control circuit 25 generates a control signal for decreasing the number of the switches 31 that are ON. Furthermore, the number of the switches 31 at this time is adjusted in such a way that the intensity of the L+R component signal becomes the same as the intensity of the L-R component signal. In this way, the current amount that flows in a mixer circuit is decreased and the intensity of the L+R component signal becomes the same as the intensity of the L-R component signal. Therefore, it becomes possible to increase the separation degree between the stereo right signal and the stereo left signal.

Furthermore, it is possible to change the size of each transistor 23 of the current mirror circuits 30 or 32 and to optionally select the transistor 23 using the switch 31. By changing each size of the transistor 23 of the current mirror circuit 30 or 32 in this way, it becomes possible to set to an optional value, the current amount of the current that flows in the current mirror circuit of the broken-line part C, according to the combination of the selected transistors 23.

The following is the explanation of the configuration of the separation adjustment circuit in another preferred embodiment. The separation adjustment circuit 14 is configured to change the current amount of an L-R component for separation adjustment. By changing the current amount of this L-R component, the DC bias component of the L signal and the R signal that are output signals sometimes change. For example, in the case where the current amount of the L-R component signal is adjusted to be increased, the DC bias of the L signal and the R signal that are outputted from the separation adjustment circuit 14 increases. Accordingly, distortion sometimes occurs on the L signal and the R signal.

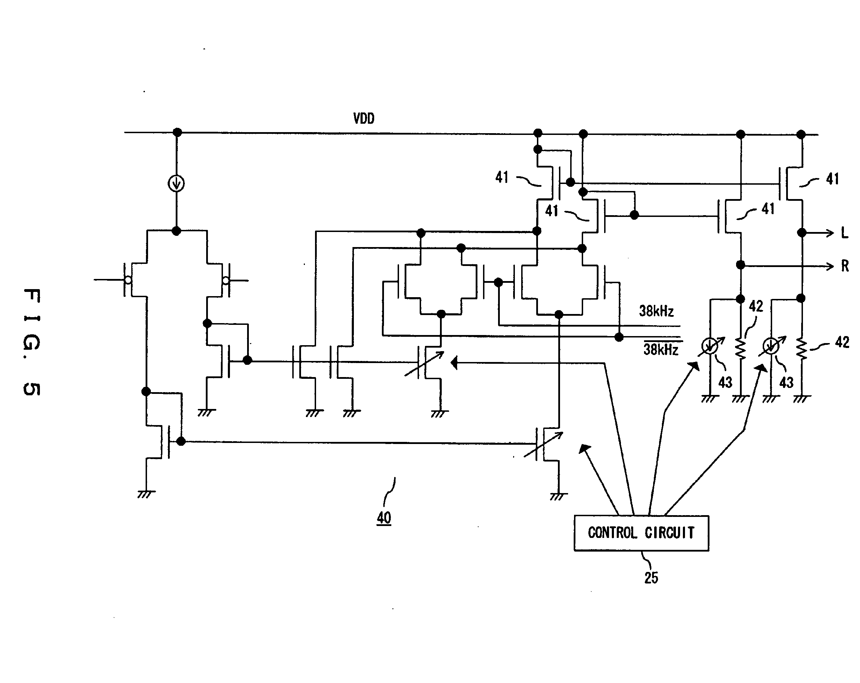

Fig.5 shows a separation adjustment circuit for not generating distortion on the outputted L signal and R signal. In Fig. 5, the same constituent elements as those shown in Fig. 3 indicate the same articles so that the explanations are omitted.

In a separation adjustment circuit 40 shown in Fig. 5, a current mirror circuit that includes a transistor 41 is connected to an output part of the separation adjustment circuit 14 of Fig. 3 and both a resistance 42 and a fixed current source 43 (second adjustment unit) that is connected to the resistance 42 in parallel are connected to the output stage of this current mirror circuit. In addition, the other terminal of the resistance 42 and that of the current source 43 are connected to ground.

The current amount of the fixed current source 43 is changed by the control signal of the control circuit 25 based on the intensity of an L-R component signal and the changed current amount is adjusted to a predetermined DC bias in such a way that the output signal does not generate distortion.

By changing the current amount of the fixed current source 43 based on the intensity of the L-R component signal in this way, the current amount of a current that flows in the resistance 42 can be changed. Therefore, for example, even if the current amount is adjusted to increase the intensity of the L-R component signal, the output can be suppressed not to exceed the fixed DC bias and the distortion of an output signal can be avoided.

In the changing method of a current amount of the fixed current source 43, it is possible that the current that flows in the resistance 42 is adjusted by connecting a fixed current source on a drain side of the transistor 23 and by selecting the transistor 23 using the switch 31, in a current mirror circuit which includes the transistor 21, a plurality of the transistors 23 and the switch 31 that is connected to each transistor 23 as shown in Fig. 4. In other words, a method of changing a current amount by connecting the fixed current source 43 to the current mirror circuit which includes a plurality of transistors and by selecting the number of the transistors on the output side using the switch, etc. is conceivable.

Meanwhile, the resistance 42 and the fixed current source 43 provided at the output stage of the separation adjustment circuit 40 as shown in Fig. 5maybe configured not to be connected to the current mirror circuit.

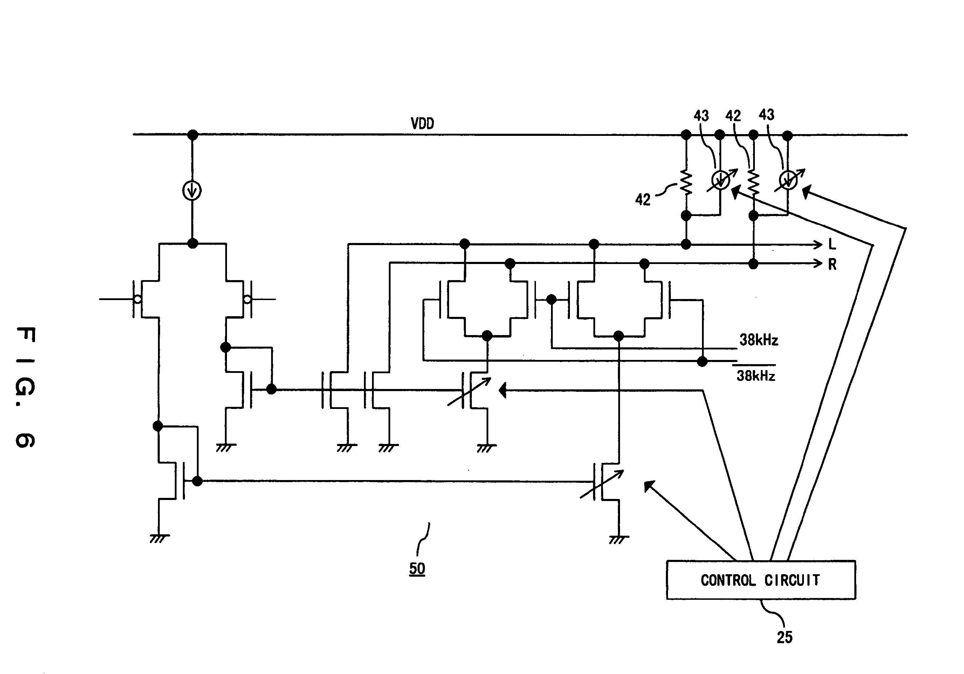

Fig. 6 shows a separation adjustment circuit configured in such a way that it adjusts the current amount of an output stage without being connected to the current mirror circuit.

As shown in Fig. 6, the resistance 42 and the fixed current source 43 that is connected to the resistance 42 in parallel are connected to the output stage of the separation adjustment circuit 50. The other terminal of the resistance 42 and that of the fixed current source 43 are connected to a power source (VDD). The current value that flows in the fixed current source 43 is changed on the basis of the control signal that is outputted from the control circuit 25 in the same way as in Fig. 5.

Even if the separation adjustment circuit is configured to adjust the current amount that flows in the resistance 42 at the output stage without being connected to the current mirror circuit, the DC bias of an output signal can be controlled at a predetermined value.

Furthermore, a variable resistance maybe provided instead of the transistor 23 of the separation adjustment circuit 14 of Fig. 3.

Both the stereo demodulation function of implementing the sum or difference computation between the L-R component signal from which the 38kHz component signal is removed and the L+R component signal and the separation adjustment function of adjusting the intensity ratio between the L-R component signal and the L+R component signal can be realized by adjusting the bias current (current amount of the current mirror circuit) of a mixer circuit having the stereo demodulation function.

Since the number of the external components such as a capacitor 77 that is indispensable for a conventional stereo receiver 70 can be decreased, it becomes possible to decrease the mounting area of a printed board.

In addition, it becomes possible to increase the separation degree between a right signal and a left signal without manual operations, which is realized by an electric control based on the control signal that is generated by the generation unit.

Furthermore, a variable resistance 78, etc. that are required at the conventional stereo receiver 70 in Fig. 1 can be omitted using the separation adjustment circuit of the preferred embodiment of the present invention so that a reception signal does not receive the influence of the impedance based on the resistance. Therefore, it becomes possible to decrease the capacity of a capacitor 76 for cutting the DC component of the reception signal. In this way, the capacitor 76 for cutting a DC component (capacitor 17 in the preferred embodiment of the present invention) having a small capacity, in other words, the capacitor having a small size can be mounted. Accordingly, it becomes possible to further decrease the mounting area of a printed board.

Additionally, the above-mentioned separation adjustment circuit is configured to adjust the current amount of the L-R component but this circuit may be also configured to adjust the current amount of the L+R component.

According to the separation adjustment circuit of the present invention, the current amount that flows in the retrieving unit used when a sum signal or a difference signal is retrieved from a stereo composite signal is adjusted based on the control signal generated by the generation unit so that these configurations can be realized on an IC chip, etc. Therefore, the number of the external components for the separation adjustment that are required in a conventional stereo receiver can be decreased and accordingly the mounting area of a printed board can be also decreased.

Furthermore, since the intensity ratio between a sum signal and a difference signal are adjusted on the basis of the control signal that is generated by the generation unit, it becomes possible to increase the separation degree between a right signal and a left signal without manual operations.

**Claims**

1. A separation adjustment circuit for adjusting an intensity ratio between a sum signal and a difference signal in a stereo composite signal and for increasing a separation degree between a stereo right signal and a stereo left signal, comprising:

   a sum signal retrieving unit (21, 22) retrieving a sum signal from the composite signal;
   a difference signal retrieving unit (21, 23) retrieving a difference signal from the stereo composite signal;
   a mixing unit (24) mixing the sum signal and the difference signal, thereby obtaining a stereo right signal and a stereo left signal;
   a first adjustment unit (23) adjusting a current amount that flows in the sum signal retrieving unit or the difference signal retrieving unit and thereby adjusting an intensity of the sum signal or an intensity of the difference signal; and
   a generation unit (25) generating a control signal for controlling an adjustment operation of the first adjustment unit (23),
   **characterized by** further comprising:

   a resistance (42) that is connected to an output stage of the separation adjustment circuit; and
   a second adjustment unit (43) being connected to the resistance in parallel and adjusting a current amount flowing in the resistance, wherein
   the second adjustment unit adjusts a current amount that flows in the resistance based on a current amount adjusted by the first adjustment unit.

2. The separation adjustment circuit according to claim 1; wherein
   the first adjustment unit (23) comprises a plurality of transistors and a selection unit (31) selecting the plurality of transistors based on the control signal, and it adjusts an intensity of the sum signal or an intensity of the difference signal based on a total current amount of the transistors selected by the selection unit.

3. The separation adjustment circuit according to claim 1, wherein
the control signal is generated based on a separation degree between a stereo right signal and a stereo left signal that are outputted from the separation adjustment circuit.


**Patentansprüche**

1. Trennungsanpassungsschaltung zur Anpassung eines Intensitätsverhältnisses zwischen einem Summensignal und einem Differenzsignal in einem Stereocompositsignal, und zum Vergrößern des Trennungsgrads zwischen einem rechten Stereosignal und einen linken Stereosignal, mit:

einer Summensignalwiedergewinnungseinheit (21, 22) zum Wiedergewinnen eines Summensignals aus dem Compositsignal,
einer Differenzsignalwiedergewinnungseinheit (21, 23) zum Wiedergewinnen eines Differenzsignals aus dem Stereocompositsignal,
einer Mischeinheit (24) zum Mischen des Summensignals und des Differenzsignals, um auf diese Weise ein rechtes Stereosignal und ein linkes Stereosignal zu erhalten,
einer ersten Anpassungseinheit (23) zum Anpassen einer Stromstärke, die in der Summensignalwiedergewinnungseinheit oder der Differenzsignalwiedergewinnungseinheit fließt, und um auf diese Weise eine Intensität des Summensignals oder eine Intensität des Differenzsignals anzupassen, und
einer Erzeugungseinheit (25) zur Erzeugung eines Steuerungssignals zur Steuerung eines Anpassungsvorgangs der ersten Anpassungseinheit (23),
ferner **gekennzeichnet durch**
einen Widerstand (42), der mit einer Ausgangsstufe der Trennungsanpassungsschaltung verbunden ist, und
eine zweite Anpassungseinheit (43), die mit dem Widerstand parallel geschaltet ist und die zur Anpassung einer in dem Widerstand fließenden Stromstärke dient, wobei
die zweite Anpassungseinheit eine in dem Widerstand fließende Stromstärke auf der Basis einer mittels der ersten Anpassungseinheit angepassten Stromstärke anpasst.

2. Trennungsanpassungsschaltung nach Anspruch 1, wobei
die erste Anpassungseinheit (23) eine Vielzahl von Transistoren und eine Auswähleinheit (31) aufweist zum Auswählen der Vielzahl der Transistoren auf der Basis des Steuerungssignals, und zum Anpassen einer Intensität des Summensignals oder einer Intensität des Differenzsignals auf der Basis einer Gesamtstromstärke der durch die Auswähleinheit ausgewählten Transistoren dient.

3. Trennungsanpassungsschaltung nach Anspruch 1, wobei
das Steuerungssignal auf der Basis eines Trennungsgrads zwischen einem rechten Stereosignal und einen linken Stereosignal erzeugt wird, die durch die Trennungsanpassungsschaltung ausgegeben werden.


**Revendications**

1. Circuit de réglage de séparation destiné à régler un rapport d'intensité entre un signal de somme et un signal de différence dans un signal stéréo composite et destiné à augmenter un degré de séparation entre un signal stéréo de droite et un signal stéréo de gauche, comprenant :

une unité de récupération de signal de somme (21, 22) destinée à récupérer un signal de somme dans le signal composite ;
une unité de récupération de signal de différence (21, 23) destinée à récupérer un signal de différence dans le signal stéréo composite ;
une unité de mélange (24) destinée à mélanger le signal de somme et le signal de différence, en obtenant ainsi un signal stéréo de droite et un signal stéréo de gauche ;
une première unité de réglage (23) destinée à régler une quantité de courant qui circule dans l'unité de récupération de signal de somme ou l'unité de récupération de signal de différence, en réglant ainsi une intensité du signal de somme ou une intensité du signal de différence ; et

une unité génératrice (25) destinée à générer un signal de commande, afin de commander une opération de réglage de la première unité de réglage (23),
**caractérisé en ce qu'**il comprend en outre :

une résistance (42) qui est connectée à un étage de sortie du circuit de réglage de séparation ; et
une seconde unité de réglage (43) qui est connectée à la résistance en parallèle et qui règle une quantité de courant qui circule dans la résistance, dans laquelle
la seconde unité de réglage règle une quantité de courant qui circule dans la résistance en se fondant sur une quantité de courant réglée par la première unité de réglage.

2. Circuit de réglage de séparation selon la revendication 1 ; dans lequel
la première unité de réglage (23) comprend une pluralité de transistors et une unité de sélection (31) qui sélectionne la pluralité de transistors en se fondant sur le signal de commande, et en ce qu'elle règle une intensité du signal de somme ou une intensité du signal de différence en se fondant sur une quantité totale de courant des transistors sélectionnés par l'unité de sélection.

3. Circuit de réglage de séparation selon la revendication 1, dans lequel
le signal de commande est généré en se fondant sur un degré de séparation entre un signal stéréo de droite et un signal stéréo de gauche qui sont sortis par le circuit de réglage de séparation.

# F I G. 1

EP 1 530 310 B1

EXTERNAL COMPONENT

FRONT END PART 72

FM DETECTION 73

71

76

78

79

81

BUFFER AMPLIFIER 80

REFERENCE VOLTAGE

77

75

70

74

STEREO DEMODULATION

→ L

→ R

F I G. 2

F I G. 3

FIG. 4A

MIXER CIRCUIT

FIG. 4B

MIXER CIRCUIT

FIG. 5

F I G. 6